# EUROPÄISCHE PATENTSCHRIFT

(11) **EP 0 785 643 B1**
(45) Veröffentlichungstag und Bekanntmachung des Hinweises auf die Patenterteilung: **24.05.2006**
(21) Anmeldenummer: 97100630.9
(22) Anmeldetag: 16.01.1997
(51) Int. Cl.: H04J 14/02, H04B 10/17, G02B 6/34

(54) **Schaltungsanordnung zur optischen Verstärkung in einem WDM-Multiplexer/-Demultiplexer mit einem Optical Phased Array**
Circuit arrangement for optical amplification in a WDM multiplexer/demultiplexer with an optical phased array
Circuit d'amplification optique dans un multiplexeur/démultiplexeur à multiplexage des ondes par réseaux optiques pilotés en phase

(30) Priorität: 25.01.1996 DE 19602674
(43) Veröffentlichungstag der Anmeldung: 23.07.1997
(73) Patentinhaber: SIEMENS AKTIENGESELLSCHAFT, 80333 München (DE)
(72) Erfinder: Derr, Frowin, Dr.-Ing., 89075 Ulm (DE)

(56) Entgegenhaltungen:
- EP-A- 0 617 527
- US-A- 5 140 655
- US-A- 5 390 200
- DELAVAUX J -M P ET AL: "REAP: RECYCLED ERBIUM AMPLIFIER PUMP" IEEE PHOTONICS TECHNOLOGY LETTERS, Bd. 6, Nr. 3, 1. März 1994 (1994-03-01), Seiten 376-379, XP000439713 ISSN: 1041-1135
- HATTORI K ET AL: "ERBIUM-DOPED SILICA-BASED WAVEGUIDE AMPLIFIER INTEGRATED WITH A 980/1530 NM WDM COUPLER" ELECTRONICS LETTERS, Bd. 30, Nr. 11, 26. Mai 1994 (1994-05-26), Seite 856/857 XP000465036 ISSN: 0013-5194

## Beschreibung

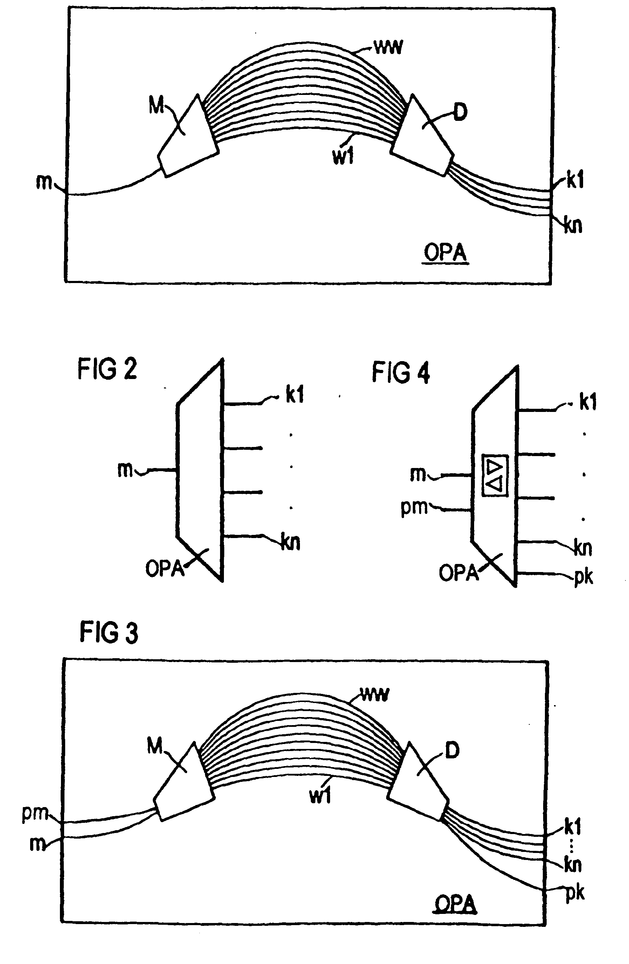

Wesentliche Komponenten von (dichten) WDM(Wavelength Division Multiplex)-Telekommunikationssystemen oder, mit anderen Worten gesagt, von optischen Frequenzmultiplex-(OFDM-)Systemen, sind WDM-Multiplexer/-Demultiplexer zur Zusammenfassung von optischen Kanälen im (dichten) Wellenlängenmultiplex bzw. zur Trennung im (dichten) Wellenlängenmultiplex zusammengefasster optischer Kanäle voneinander (telcom report international 18(1995) Special "ISS'95", 10 ... 14). Solche optischen Frequenzmultiplexer/-demultiplexer können z.B. in SiO₂/Si-Tech nologie in Form von sog. Optical Phase Arrays hergestellt sein; ein solches einen WDM-Multiplexer/-Demultiplexer realisierendes Optical Phased Array OPA weist, wie dies auch in FIG 1 angedeutet ist, im Prinzip auf einem Substrat zwei Flachwellenleiter M, D auf, zwischen deren inneren Stirnflächen eine Mehrzahl von - einen sog. Phase Shifter bildenden - Streifenwellenleitern w1, ..., ww mit sich von Lichtwellenleiter w1, ... zu Lichtwellenleiter ..., ww ändernder Länge verläuft und auf deren einander abgewandte Stirnflächen die kanalindividuellen Lichtwellenleiter k1, ..., kn bzw. der Multiplex-Lichtwellenleiter m stossen (IEEE Photon. Technol. Lett., 7(1992)10, S.1040 ... 1041).

Durch die optischen Komponenten hervorgerufene Signalverluste sind mittels hinzugefügter optischer Verstärker zu kompensieren. Ein solcher Verstärker, üblicherweise ein optischer Erbium-dotierter Faserverstärker, der neben einem Pumplaser die Erbium-dotierte Faser und die notwendigen wellenlängenselektiven Koppler aufweist, wird in aller Regel multiplexseitig, d.h. auf der Seite des Multiplexsignals (hinter dem Multiplexer bzw. vor dem Demultiplexer), eingesetzt.

Die Erfindung zeigt nun einen Weg zu einer aufwandgünstigen Realisierung der in einem optischen Frequenzmultiplexer/demultiplexer zur Kompensation der durch den optischen Frequenzmultiplexer/demultiplexer bewirkten Dämpfung des optischen Signals erforderlichen optischen Verstärkung.

Die Erfindung betrifft eine Schaltungsanordnung zur optischen Verstärkung in einem WDM-Multiplexer/-Demultiplexer mit einem Optical Phased Array; diese Schaltungsanordnung ist erfindungsgemäß dadurch gekennzeichnet, daß das Optical Phased Array multiplexseitig und einzelkanalseitig jeweils einen gesonderten Wellenleiter zur Einkopplung bzw. Auskopplung von Pumplicht aufweist und daß die innere Wellenleiterstruktur des Optical Phased Arrays mit Ionen der seltenen Erden, insbesondere mit Erbium, dotiert ist.

Die Erfindung, die von der - prinzipiell (in Electronics Letters, 30(1994)11, S. 856 - 857) nachgewiesenen - Funktionsfähigkeit eines verstärkenden Wellenleiters in Glas Gebrauch macht, vereinigt in vorteilhafter Weise die beiden Funktionen (De-)Multiplexen und Verstärken und ermöglicht damit eine aufwandgünstige Realisierung einer optischen Verstärkung in einem optischen Frequenzmultiplexer/demultiplexer, mit der die durch den WDM-Multiplexer/demultiplexer verursachte optische Signaldämpfung kompensiert werden kann.

Weitere Besonderheiten der Erfindung werden aus der nachfolgenden näheren Erläuterung anhand der Zeichnungen ersichtlich. Dabei zeigen
- FIG 1: ein Prinzipschaltbild eines einen WDM-Multiplexer/-Demultiplexer realisierenden bekannten Optical Phased Arrays und
- FIG 2: ein Blockschaltbild eines solchen WDM-Multiplexers/-Demultiplexers;
- FIG 3: zeigt das Prinzipschaltbild eines einen WDM-Multiplexer/-Demultiplexer gemäß der Erfindung realisierenden Optical Phased Arrays, und
- FIG 4: zeigt das Blockschaltbild eines solchen WDM-Multiplexers/-Demultiplexers.

In FIG 1 ist ein einen WDM-Multiplexer/-Demultiplexer realisierendes Optical Phased Array OPA skizziert, das im Prinzip auf einem Substrat zwei Flachwellenleiter M, D aufweist, zwischen deren inneren Stirnflächen eine Mehrzahl von - einen sog. Phase Shifter bildenden - Streifenwellenleitern w1, ..., ww mit sich von Lichtwellenleiter w1, ... zu Lichtwellenleiter ..., ww ändernder Länge verläuft und auf deren einander abgewandte Stirnflächen die kanalindividuellen Lichtwellenleiter k1, ..., kn bzw. der Multiplex-Lichtwellenleiter m stossen.

Das Blockschaltbild eines solchen WDM-Multiplexers/-Demultiplexers zeigt FIG 2, in der die entsprechenden Schaltungselemente mit den gleichen Bezugszeichen wie in FIG 1 versehen sind, so daß es insoweit keiner weiteren Erläuterung bedarf.

Die in FIG 1 skizzierte Struktur eines Optical-Phased-Array-Multiplexers/-Demultiplexers wird nun gemäß FIG 3 erweitert, um eine Kompensation der durch den optischen Frequenzmultiplexer/demultiplexer bewirkten Dämpfung des optischen Signals zu ermöglichen.

Gemäß FIG 3 weist das Optical Phased Array OPA - neben den schon bei der Erläuterung der FIG 1 genannten, in FIG 3 mit denselben Bezugszeichen versehenen Elementen - multiplexseitig und einzelkanalseitig jeweils einen gesonderten Wellenleiter pm, pk zur Einkopplung bzw. Auskopplung von Pumplicht auf, und zugleich ist die innere Wellenleiterstruktur des Optical Phased Arrays OPA, d.h. jedenfalls seine den Phase Shifter bildenden Streifenwellenleiter w1, .., ww, mit Ionen der Seltenen Erden, insbesondere mit Erbium, dotiert.

Ein Blockschaltbild eines solchen WDM-Multiplexers/-Demultiplexers zeigt FIG 4, in der die entsprechenden Schaltungselemente mit den gleichen Bezugszeichen wie in FIG 3 versehen sind, so daß es insoweit keiner weiteren Erläuterung bedarf.

Die Einkopplung bzw. Auskopplung des Pumplichts geht in dem in FIG 3 bzw. FIG 4 skizzierten Optical Phased Array OPA in prinzipiell gleicher Weise vor sich wie die Zusammenfassung bzw. Trennung des Signallichts der einzelnen optischen Nutzkanäle. Das Optical Phased Array kann dabei im kodirektionalen Verstärkungsbetrieb (Nutzsignallicht und Pumplicht laufen in gleicher Richtung) oder im kontradirektionalen Verstärkungsbetrieb (Nutzsignallicht und Pumplicht laufen in entgegengesetzter Richtung) arbeiten, unabhängig davon, ob das Optical Phased Array als Multiplexer oder als Demultiplexer betrieben wird.

Das Pumplicht, dessen Wellenlänge üblicherweise bei 980 oder 1480 nm liegen wird, wird am einen der beiden gesonderten Wellenleiter pk, pm eingespeist mit der Folge, daß das zwischen den kanalindividuellen Lichtwellenleitern k1, ..., kn und dem Multiplex-Lichtwellenleiter m (oder auch umgekehrt) geführte Nutzsignallicht in der Erbium- o.ä. dotierten inneren Wellenleiterstruktur des Optical Phased Arrays OPA in für optische Faserverstärker bekannter, hier nicht weiter interessierender Weise eine Verstärkung auf Kosten des Pumplichts erfährt.

Der dabei nicht absorbierte Anteil des Pumplichts wird zu dem anderen der beiden Pumpsignalanschlüsse pm, pk gekoppelt; die an diesem Pumplichtausgang entnommene Pumplichtleistung kann für weitere Verstärkungszwecke, beispielsweise in einem weiteren WDM-Multiplexer/-Demultiplexer, und/oder zur Verstärkungsregelung genutzt werden.

## Patentansprüche

1. Schaltungsanordnung zur optischen Verstärkung in einem WDM-Multiplexer/-Demultiplexer mit einem Optical Phased Array,
**dadurch gekennzeichnet,**
**daß** das Optical Phased Array (OPA) multiplexseitig und einzelkanalseitig jeweils einen gesonderten Wellenleiter (pm, pk) zur Einkopplung bzw. Auskopplung von Pumplicht aufweist und daß die innere Wellenleiterstruktur (w1, ..., ww) des Optical Phased Arrays (OPA) mit Erbium oder anderen Ionen der Seltenen Erden, insbesondere Erbium, dotiert ist.

2. Schaltungsanordnung nach Anspruch 1, derart gestaltet, daß der nicht absorbierte Anteil des Pumplichts für weitere Verstärkungszwecke, insbesondere in einem weiteren WDM-Multiplexer/-Demultiplexer, genutzt werden kann.

## Claims

1. Circuit arrangement for optical amplification in a WDM multiplexer/demultiplexer with an optical phased array,
**characterised in that**
the optical phased array (OPA) has, both multiplex-side and channel-separated side, a separate wave guide (pm, pk) for coupling and decoupling pumping light, and **in that** the inner wave guide structure (w1 to ww) of the optical phased array (OPA) is doped with erbium or other ions of rare earths, in particular erbium.

2. Circuit arrangement according to Claim 1, so designed that the unabsorbed component of the pumping light can be used for further amplification purposes, in particular in a further WDM multiplexer/demultiplexer.

## Revendications

1. Agencement de circuit pour l'amplification optique dans un multiplexeur/démultiplexeur WDM avec un Optical Phased Array,
**caractérisé en ce que**,
le Optical Phased Array (OPA) présente côté multiplexage et côté canal individuel respectivement un guide d'onde (pm, pk) séparé pour l'injection et 1' extraction de la lumière de pompage et **en ce que** la structure interne du guide d'onde (w1, ..., ww) du Optical Phased Array (OPA) est dopée avec de l'erbium ou d'autres ions de terres rares, en particulier de l'erbium.

2. Agencement de circuit selon la revendication 1, conçu de telle sorte que la partie non absorbée de la lumière de pompage peut être utilisée pour d'autres amplifications, en particulier dans un autre multiplexeur/démultiplexeur WDM.
